(19) **Europäisches Patentamt / European Patent Office / Office européen des brevets**

(11) **EP 2 458 910 B1**

(12) ## EUROPEAN PATENT SPECIFICATION

(45) Date of publication and mention
of the grant of the patent:
**10.01.2018 Bulletin 2018/02**

(51) Int Cl.:
***H04W 24/08*** *(2009.01)*    *H04W 74/08* *(2009.01)*
***H04W 28/02*** *(2009.01)*

(21) Application number: **10816624.0**

(86) International application number:
**PCT/CN2010/074867**

(22) Date of filing: **30.06.2010**

(87) International publication number:
**WO 2011/032420 (24.03.2011 Gazette 2011/12)**

(54) **METHOD AND APPARATUS FOR DETECTING PERFORMANCE OF RANDOM ACCESS CHANNEL**

VERFAHREN UND VORRICHTUNG ZUR ERKENNUNG DER LEISTUNG EINES DIREKTZUGRIFFSKANALS

PROCÉDÉ ET APPAREIL DE DÉTECTION DE PERFORMANCES DE CANAL D'ACCÈS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **16.09.2009   CN 200910190306**

(43) Date of publication of application:
**30.05.2012   Bulletin 2012/22**

(73) Proprietor: **ZTE Corporation**
**Shenzhen, Guangdong 518057 (CN)**

(72) Inventors:
• **SHA, Xiubin**
**Shenzhen City Guangdong Province 518057 (CN)**

• **XU, Xin**
**Shenzhen City Guangdong Province 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**WO-A1-2008/041916      WO-A1-2008/135231**
**CN-A- 1 852 543      US-A- 5 991 633**
**US-A1- 2005 047 347      US-A1- 2006 153 131**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to the field of wireless communication, and in particular, to a method and apparatus for detecting performance of random access channel (RACH).

Background of the Related Art

Performance statistics is a basic function in mobile communication networks. Results of the performance statistics reflect specific operation situations of the networks, which provide basis for network maintenance, network plan and optimization, service evaluation, etc. Existing statistical methods include cumulative count (CC), dynamic variable measurement (GAUGE), discrete event registration (DER) and status inspection (SI). Statistical object classifications include statistical items based on a radio network controller (RNC), based on a cell, based on an adjacent cell relationship, etc.

Random access channel (RACH for short hereinafter) is an uplink transmission channel on which a user equipment (UE) sends control or data information to a radio network controller (RNC). In universal mobile telecommunications system (UMTS), radio resource control (RRC) connection requests and RRC connection setup completion messages, such as UE registration, routing area update, new service setup, etc., exchanged between all UEs and the network side, are sent through the RACH. If the RACH is congested, the RNC cannot receive the RRC connection requests or RRC connection setup completion messages, thereby influencing the normal service procedure. There is no effective measure to find whether the RACH is overloaded in the prior art.

The document WO2008/041916A1 discloses a method in a network node in control of a cell in a cellular telecommunication network for reducing intra-cell interference between user equipment residing in said cell and performing random access.

The document US5991633A discloses a method for dynamically controlling the length of an R_DATA message on a random access channel.

The document US2006/153131A1 discloses a method for determining a number of ranging slots by a base station in a broadband wireless access communication system.

Content of the Invention

In view of this, the present invention provides a method according to claim 1 and apparatus according to claim 6 for detecting performance of a random access channel so as to effectively find overload of the RACH. Further improvements and embodiments are provided in the dependent claims.

Also provided is a method for detecting performance of a random access channel, which comprises:

setting a maximum utilization ratio threshold and a first average utilization ratio threshold, and obtaining a maximum utilization ratio and an average utilization ratio of the random access channel; wherein

when the maximum utilization ratio is higher than the maximum utilization ratio threshold and the average utilization ratio is higher than the first average utilization ratio threshold, the random access channel is in a congestion status;

thereby implementing detection of a load status of the random access channel.

In an embodiment of the method, the step of obtaining the maximum utilization ratio and the average utilization ratio of the random access channel comprises obtaining the maximum utilization ratio and the average utilization ratio according to a common measurement report in one performance statistical cycle.

In an embodiment of the method, the performance statistical cycle contains a plurality of common measurement report cycles.

The step of obtaining the maximum utilization ratio according to the common measurement report in the performance statistical cycle comprises: obtaining a transmission time interval utilization ratio of each common measurement report cycle in the performance statistical cycle by dividing the number of occupied transmission time intervals in the common measurement report cycle by the total number of transmission time intervals; and determining the maximum of transmission time interval utilization ratios of the plurality of common measurement report cycles to be the maximum utilization ratio.

The step of obtaining the average utilization ratio according to the common measurement report in the performance statistical cycle comprises obtaining the average utilization ratio by dividing the total number of the occupied transmission time intervals in the performance statistical cycle by the total number of the transmission time intervals.

In an embodiment of the method, when there are two random access channels in a cell, in the step of obtaining the maximum utilization ratio of the random access channel, the maximum of the maximum utilization ratios of the two random access channels is the maximum utilization ratio of the two random access channels in the cell; and in the step of obtaining the average utilization ratio of the random access channel, the average utilization ratio of the two random access channels in the cell is obtained by dividing the total number of the occupied transmission time intervals of the two random access channels by the total number of the transmission time intervals of the two random access channels.

In an embodiment of the method, both the maximum utilization ratio threshold and the first average utilization ratio threshold are 95%.

In an embodiment of the method, before the step of obtaining the maximum utilization ratio and the average utilization ratio of the random access channel, the method further comprises:

determining whether a radio resource control connection success ratio is lower than a preset threshold, obtaining the maximum utilization ratio and the average utilization ratio of the random access channel if the radio resource control connection success ratio is lower than the preset threshold, and ending the detection process if the radio resource control connection success ratio is higher than the preset threshold.

In an embodiment of the method, the method further comprises:

setting a second average utilization ratio threshold which is lower than the first average utilization ratio threshold; and if it is determined that the maximum utilization ratio is higher than the maximum utilization ratio threshold and the average utilization ratio is lower than the second average utilization ratio threshold, determining that parameter configuration of the random access channel is unreasonable; if it is determined that the maximum utilization ratio is lower than the maximum utilization ratio threshold and the average utilization ratio is lower than the second average utilization ratio threshold, determining that the performance of the random access channel is poor or there is a problem in a forward access channel.

Also provided is an apparatus for detecting performance of a random access channel, which comprises:

a maximum utilization ratio and average utilization ratio obtaining module configured to set a maximum utilization ratio threshold and a first average utilization ratio threshold and obtain a maximum utilization ratio and an average utilization ratio of the random access channel; and

a maximum utilization ratio and average utilization ratio determining module configured to, if it is determined that the maximum utilization ratio is higher than the maximum utilization ratio threshold and the average utilization ratio is higher than the first average utilization ratio threshold, determine that the random access channel is in a congestion status;

thereby implementing detection of a load status of the random access channel.

The maximum utilization ratio and the average utilization ratio are obtained according to a common measurement report in one performance statistical cycle.

The performance statistical cycle contains a plurality of common measurement report cycles.

The maximum utilization ratio and average utilization ratio obtaining module comprises:

a maximum utilization ratio obtaining unit configured to obtain a transmission time interval utilization ratio of each common measurement report cycle in the performance statistical cycle by dividing the number of occupied transmission time intervals in the common measurement report cycle by the total number of transmission time intervals; and determine the maximum of transmission time interval utilization ratios of the plurality of common measurement report cycles to be the maximum utilization ratio; and

an average utilization ratio obtaining unit configured to obtain the average utilization ratio by dividing the total number of the occupied transmission time intervals in the performance statistical cycle by the total number of the transmission time intervals.

The apparatus for detecting performance of a random access channel described above can timely find and accurately locate network performance problems, such as abnormal service procedure and low radio resource control setup success ratio, caused by congestion of the RACH, and provide a good basis for solving the related problems.

The present invention allows the maximum utilization ratio and the average utilization ratio of the random access channel to be obtained by setting the maximum utilization ratio threshold and the first average utilization ratio threshold, and determines whether the random access channel is in a congestion status based on the maximum utilization ratio and the average utilization ratio and the maximum utilization ratio threshold and the first average utilization ratio threshold so as to effectively locate various problems caused by congestion of the random access channel and provide a good basis for solving the related problems.

Brief Description of Drawings

FIG. 1 is a schematic diagram of a common measurement process according to an embodiment of the present invention;

FIG. 2 is a schematic diagram of a method for obtaining a maximum utilization ratio of a RACH according to an embodiment of the present invention;

FIG. 3 is a schematic diagram of a method for obtaining an average utilization ratio of a RACH according to an embodiment of the present invention;

FIG. 4 is a block diagram of a performance statistical apparatus for measuring congestion of a RACH according to an embodiment of the present invention;

FIG. 5 is a flow chart of a process for determining whether a RACH is congested according to an embodiment of the present invention; and

FIG. 6 is a block diagram of an apparatus for detecting performance of a random access channel according to an embodiment of the present invention.

Preferred Embodiments of the Present Invention

The present invention is described in detail with reference to the accompanying drawings and in combination with specific embodiments hereinafter.

In order to solve problems in the prior art, such as timeout of a RRC connection setup completion message due to inability to locate congestion of a RACH, or offline and call failure of a UE in an area where network coverage is good, the present invention provides a method and apparatus for detecting performance of the RACH in a wireless communication network so as to effectively find congestion of the RACH and locate the problem of system anomaly. Therefore, network performance problems, such as abnormal service procedure and low radio resource control (RRC) setup success ratio, caused by congestion of the RACH, can be found timely find and located accurately.

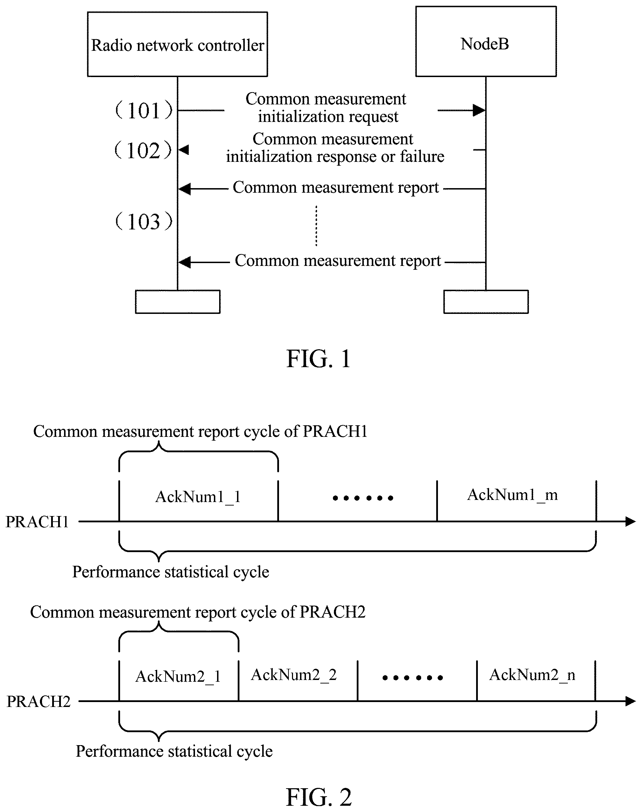

As shown in FIG. 1, a common measurement process according to an embodiment of the present invention includes the following steps.

In step 101, a radio network controller (RNC) sends a common measurement initialization request message containing a common measurement report cycle and a common measurement type (the type is acknowledged physical random access channel (PRACH) preamble) to a NodeB.

In step 102, the NodeB returns a common measurement initialization response to the radio network controller according to its own capability and the equipment condition and starts acknowledged PRACH preamble common measurement and performs step 103, or returns a common measurement failure message to the radio network controller, and ends the process.

In step 103, the NodeB periodically reports the result of the common measurement in step 102 to the radio network controller according to the common measurement report cycle obtained in step 101.

In the embodiment of the present invention, the status of the RACH is determined by parameters such as the maximum utilization ratio and average utilization ratio. Obtaining of the maximum utilization ratio and average utilization ratio will be described hereinafter respectively.

As shown in FIG. 2, obtaining of the maximum utilization ratio is illustrated.

Assuming that there are two physical random access channels (PRACHs) in a cell: the maximum acknowledged PRACH preamble common measurement report value of PRACH1 in the whole performance statistical cycle is AckNum1, the common measurement report cycle is RptPrd1, and the transmission time interval (TTI) is TTI1, then the maximum utilization ratio of PRACH1 is $\dfrac{AckNum1}{RptPrd1/TTI1}$, the maximum acknowledged PRACH preamble common measurement report value of PRACH2 in the whole performance statistical cycle is AckNum2, the common measurement report cycle is RptPrd2, and the TTI is TTI2, then the maximum utilization ratio of PRACH2 is $\dfrac{AckNum2}{RptPrd2/TTI2}$, the maximum utilization ratio of the PRACHs in the cell is $\max\left(\dfrac{AckNum1}{RptPrd1/TTI1},\dfrac{AckNum2}{RptPrd2/TTI2}\right)$.

It can be seen from the example shown in FIG. 2 that in PRACH1, m common measurement report cycles are included, and report values of the m common measurement report cycle are AckNum1_1, ......, AckNum1_m respectively. A report value is the number of the occupied TTIs in a common measurement report cycle, that is, the number of the used TTIs. The total number of TTIs (including the occupied TTIs and idle TTIs) in the common measurement report cycle can be obtained by RptPrd1/TTI1. Generally speaking, in a performance statistical cycle, durations of all the common measurement report cycles are the same, and durations of their TTI1s are the same as well. Therefore, the report values can be compared directly to find the maximum of the numbers of the occupied TTIs reported by the common measurement report cycles in the performance statistical cycle. For example, if AckNum1_1 is the maximum, the maximum utilization ratio of PRACH1 is $\dfrac{AckNum1\_1}{RptPrd1/TTI1}$.

Similarly, in PRACH2, n common measurement report cycles (n may be different from the number of PRACH1) are included, and report values of the n common measurement report cycles are AckNum2_1, AckNum2_2, ......, AckNum2_n respectively. For example, assuming that AckNum2_2 is the maximum value, then the maximum utilization ratio of PRACH2 is $\dfrac{AckNum2\_2}{RptPrd2/TTI2}$.

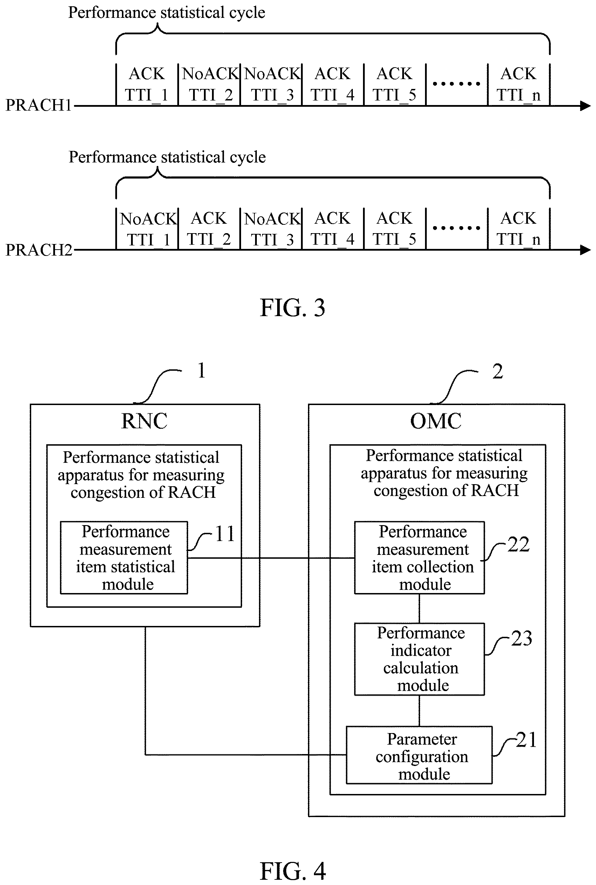

As shown in FIG. 3, ACK represents occupied TTIs, NoACK represents idle TTIs, and obtaining of the average utilization ratio is illustrated.

Similarly, assuming that there are two PRACHs in a cell.

Assuming that the cumulative sum of the acknowledged PRACH preamble common measurement report values of PRACH1 in a performance statistical cycle is TotalAckNum1, and TTI is TTI1.

Assuming that the cumulative sum of the acknowledged PRACH preamble common measurement report values of PRACH2 in a performance statistical cycle is TotalAckNum2, TTI is TTI2, and the performance statistical cycle of the PRACH is StatPrd, then the average utilization ratio of the PRACH in the cell is

$$\frac{TotalAckNum1 + TotalAckNum2}{StatPrd/TTI1 + StatPrd/TTI2}.$$

TotalAckNum1 is the cumulative sum of all common measurement report values in PRACH1. Referring to FIG. 2, report values of m common measurement report cycles, that is, the numbers of the occupied TTIs of the m common measurement report cycles are AckNum1_1, .., AckNum1_m respectively, then TotalAckNum1=AckNum1_1+ ... ... +AckNum1_m.

Similarly, TotalAckNum2 is the cumulative sum of all common measurement report values in PRACH2. Referring to FIG. 2, report values of n common measurement report cycles are AckNum2_1, AckNum2_2, .., AckNum2_n respectively, then TotalAckNum2=AckNum2_1+AckNum2_2+......+AckNum2_n.

TotalAckNum1+ TotalAckNum2 is the total number of the occupied TTIs of the two PRACHs, the total number of TTIs in PRACH1 is obtained by StatPrd/TTI1, and the total number of TTIs in PRACH2 is obtained by StatPrd/TTI2, so the average utilization ratio of the two PRACHs is equal to

$$\frac{TotalAckNum1 + TotalAckNum2}{StatPrd/TTI1 + StatPrd/TTI2}.$$

As shown in FIG. 4, a performance statistical apparatus for measuring congestion of a RACH according to an embodiment of the present invention mainly comprises a NodeB (not shown), a radio network controller (RNC for short hereinafter) at the first side and an operation maintenance controller (OMC for short hereinafter) at the second side.

The NodeB comprises a common measurement module configured to perform common measurement and a common measurement report module configured to report a common measurement report.

The radio network controller comprises a performance measurement item statistical module 11 configured to calculate the sum of the numbers of the occupied TTIs of RACHs in a performance statistical cycle (that is, TotalAckNum1 and TotalAckNum2 described above) and the maximum of the numbers of the occupied TTIs of the RACHs in the performance statistical cycle (that is, AckNum1_1 and AckNum2_2 described above).

The operation maintenance controller comprises a parameter configuration module 21 configured to set parameters necessary for operation of the RNC and NodeB; a performance measurement item collection module 22 configured to collect performance measurement items reported by the RNC; and a performance indicator calculation module 23 configured to calculate and obtain performance indicators using the collected performance measurement items in conjunction with configuration parameters, that is, calculate the maximum utilization ratio and the average utilization ratio based on the performance measurement items, and determine the status of the RACH based on the set maximum utilization ratio threshold, first average utilization ratio threshold and second average utilization ratio threshold (the second threshold is lower than the first threshold).

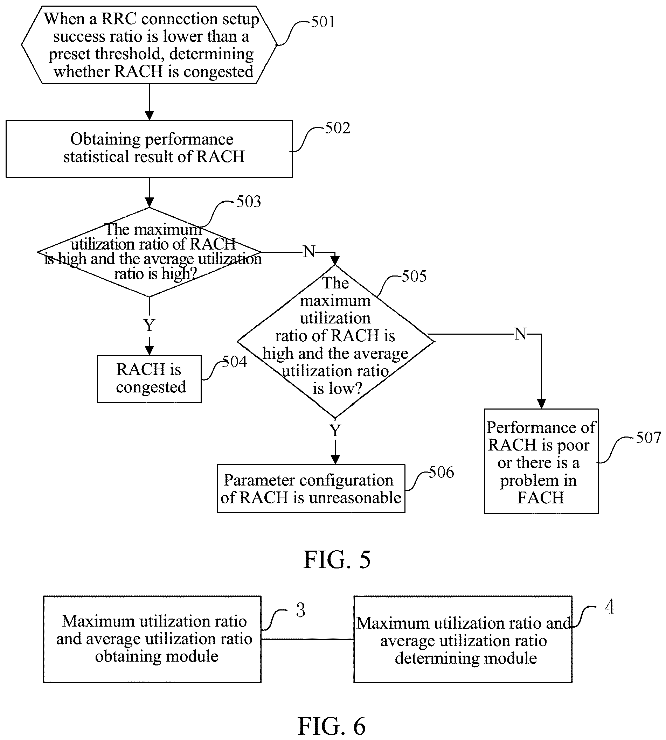

As shown in FIG. 5, according to an embodiment of the present invention, determining whether RACH is congested comprises the following steps.

In step 501, when a RRC connection setup success ratio is lower than a preset threshold (for example the preset threshold is 50%), whether the RACH is congested is determined.

The step is an optional step, and determining whether the RRC connection setup success ratio is lower than the preset threshold requires to consume some resources. Furthermore, if the RRC connection setup success ratio is higher than the preset threshold, then the determining process ends.

In step 502, performance statistical data (maximum utilization ratio, average utilization ratio) related to the RACH is obtained.

In step 503, if the maximum utilization ratio of the RACH is high (higher than the maximum utilization ratio threshold, which, for example, is 95%) and the average utilization ratio of the RACH is high (higher than the first average utilization ratio threshold, which, for example, is 95%), then step 504 is performed, otherwise, step 505 is performed.

In step 504, it is determined that the RACH is congested, and the process ends.

In step 505, if the maximum utilization ratio of the RACH is high (higher than the maximum utilization ratio threshold, which, for example, is 95%) and the average utilization ratio of the RACH is low (lower than the second average utilization ratio threshold, which, for example, is 50%), then step 506 is performed, otherwise, step 507 is performed.

Here, otherwise means that if the maximum utilization ratio of the RACH is low (lower than the maximum utilization ratio threshold, which, for example, is 95%) and the average utilization ratio of the RACH is low (lower than the second average utilization ratio threshold, which, for example, is 50%), that is, the maximum utilization ratio of the RACH is lower than the maximum utilization ratio threshold, and the average utilization ratio of the RACH is lower than the second average utilization ratio threshold, then step 507 is performed.

In step 506, it is determined that parameter configuration of the RACH is unreasonable, and the parameters are required to be optimized to reduce the probability of RACH confliction, and the process ends.

In the 507, it is determined that the performance of the RACH is poor or there is a problem in a forward access channel (FACH).

Compared with the prior art, the present invention allow sufficient data to be obtained to effectively measure congestion of the RACH in the UMTS terrestrial radio access network (UTRAN) network by measuring performance statistics of a load status of the RACH so as to solve the problem that the lower RRC connection setup success ratio caused by the congestion of the RACH cannot be located in the prior art. The determining method of the present invention is accurate, effective, simple, and easy, and is a powerful tool for network operation, maintenance and decision.

The present invention can also be extended to time division-synchronous code division multiple access (TD-SCDMA) systems.

FIG. 6 is a block diagram of an apparatus for detecting performance of a random access channel according to an embodiment of the present invention comprising:

a maximum utilization ratio and average utilization ratio obtaining module 3 configured to set a maximum utilization ratio threshold and a first average utilization ratio threshold and obtain a maximum utilization ratio and an average utilization ratio of the random access channel; and

a maximum utilization ratio and average utilization ratio determining module 4 configured to, if it is determined that the maximum utilization ratio is higher than the maximum utilization ratio threshold and the average utilization ratio is higher than the first average utilization ratio threshold, determine that the random access channel is in a congestion status;

thereby implementing detection of load status of the random access channel.

The maximum utilization ratio and the average utilization ratio are obtained according to a common measurement report in one performance statistical cycle.

The performance statistical cycle contains a plurality of common measurement report cycles.

The maximum utilization ratio and average utilization ratio obtaining module may comprise:

a maximum utilization ratio obtaining unit configured to obtain a transmission time interval utilization ratio of each common measurement report cycle in the performance statistical cycle by dividing the number of occupied transmission time intervals in the common measurement report cycle by the total number of transmission time intervals; and determine the maximum of transmission time interval utilization ratios of the plurality of common measurement report cycles to be the maximum utilization ratio; and

an average utilization ratio obtaining unit configured to obtain the average utilization ratio by dividing the total number of the occupied transmission time intervals in the performance statistical cycle by the total number of the transmission time intervals.

The above content is detailed description of the present invention made in conjunction with the preferred embodiments of the present invention, and is only examples given for the purpose of easy understanding, and the specific implementation of the present invention is not limited thereto. Various possible variations and substitutions to the present invention may be made by those skilled in the art without departing from the scope of the present invention. These variations and substitutions should be covered in the protection scope of the present invention.

Industrial Applicability

The method and apparatus for detecting performance of a random access channel in accordance with the present invention can effectively measure congestion of the RACH in the UMTS wireless access network by obtaining sufficient data so as to timely find and accurately locate network performance problems, such as abnormal service procedure and low radio resource control setup success ratio, caused by congestion of the RACH, and provide a good basis for solving the related problems.

**Claims**

1. A method for detecting performance of a random access channel, **characterized by** comprising:

setting a maximum utilization ratio threshold and a first average utilization ratio threshold, and obtaining a maximum utilization ratio and an average utilization ratio of the random access channel (502); wherein
when the maximum utilization ratio is higher than the maximum utilization ratio threshold and the average utilization ratio is higher than the first average utilization ratio threshold (503), the random access channel is determined to be in a congestion status (504);
thereby implementing detection of a load status of the random access channel;
wherein the step of obtaining the maximum utilization ratio and the average utilization ratio of the random access channel comprises obtaining the maximum utilization ratio and the average utilization ratio according to a common measurement report in one performance statistical cycle;
the performance statistical cycle contains a plurality of common measurement report cycles; wherein
the step of obtaining the maximum utilization ratio according to the common measurement report in the performance statistical cycle comprises: obtaining a transmission time interval utilization ratio of each common measurement report cycle in the performance statistical cycle by dividing the number of occupied transmission time intervals in the common measurement report cycle by the total number of transmission time intervals; and determining the maximum of transmission time interval utilization ratios of the plurality of common measurement report cycles to be the maximum utilization ratio; and
the step of obtaining the average utilization ratio according to the common measurement report in the performance statistical cycle comprises obtaining the average utilization ratio by dividing the total number of the occupied transmission time intervals in the performance statistical cycle by the total number of the transmission time intervals.

2. The method according to claim 1, wherein when there are two random access channels in a cell, in the step of obtaining the maximum utilization ratio of the random access channel, the maximum of the maximum utilization ratios of the two random access channels is the maximum utilization ratio of the two random access channels in the cell; and
in the step of obtaining the average utilization ratio of the random access channel, the average utilization ratio of the two random access channels in the cell is obtained by dividing the total number of the occupied transmission time intervals of the two random access channels by the total number of the transmission time intervals of the two random access channels.

3. The method according to claim 2, wherein both the maximum utilization ratio threshold and the first average utilization ratio threshold are 95%.

4. The method according to any one of claims 1 to 3, wherein before the step of obtaining the maximum utilization ratio and the average utilization ratio of the random access channel, the method further comprises:

   determining whether a radio resource control connection success ratio is lower than a preset threshold (501), obtaining the maximum utilization ratio and the average utilization ratio of the random access channel if the radio resource control connection success ratio is lower than the preset threshold, and ending the detection process if the radio resource control connection success ratio is higher than the preset threshold.

5. The method according to any one of claims 1 to 3, further comprising:

   setting a second average utilization ratio threshold which is lower than the first average utilization ratio threshold; and
   if it is determined that the maximum utilization ratio is higher than the maximum utilization ratio threshold and the average utilization ratio is lower than the second average utilization ratio threshold, determining that parameter configuration of the random access channel is unreasonable (506); if it is determined that the maximum utilization ratio is lower than the maximum utilization ratio threshold and the average utilization ratio is lower than the second average utilization ratio threshold, determining that the performance of the random access channel is poor or there is a problem in a forward access channel (507).

6. An apparatus for detecting performance of a random access channel, **characterized by** comprising:

   a maximum utilization ratio and average utilization ratio obtaining module (3) configured to set a maximum utilization ratio threshold and a first average utilization ratio threshold and obtain a maximum utilization ratio and an average utilization ratio of the random access channel; and
   a maximum utilization ratio and average utilization ratio determining module (4) configured to, if it is determined that the maximum utilization ratio is higher than the maximum utilization ratio threshold and the average utilization ratio is higher than the first average utilization ratio threshold, determine that the random access channel is in a congestion status;
   thereby implementing detection of a load status of the random access channel;
   wherein the maximum utilization ratio and the average utilization ratio are obtained according to a common measurement report in one performance statistical cycle;
   the performance statistical cycle contains a plurality of common measurement report cycles; wherein
   the maximum utilization ratio and average utilization ratio obtaining module (3) comprises:

      a maximum utilization ratio obtaining unit configured to obtain a transmission time interval utilization ratio of each common measurement report cycle in the performance statistical cycle by dividing the number of occupied transmission time intervals in the common measurement report cycle by the total number of transmission time intervals; and determine the maximum of transmission time interval utilization ratios of the plurality of common measurement report cycles to be the maximum utilization ratio; and

an average utilization ratio obtaining unit configured to obtain the average utilization ratio by dividing the total number of the occupied transmission time intervals in the performance statistical cycle by the total number of the transmission time intervals.

**Patentansprüche**

1.   Verfahren zum Erfassen der Leistung eines Direktzugriffskanals, **dadurch gekennzeichnet, dass** es umfasst:

Einstellen eines Schwellenwerts für das maximale Auslastungsverhältnis und eines ersten Schwellenwerts für das durchschnittliche Auslastungsverhältnis, und Erhalten eines maximalen Auslastungsverhältnisses und eines durchschnittlichen Auslastungsverhältnisses des Direktzugriffskanals (502); wobei wenn das maximale Auslastungsverhältnis höher ist als der Schwellenwert für das maximale Auslastungsverhältnis und das durchschnittliche Auslastungsverhältnis höher ist als der erste Schwellenwert für das durchschnittliche Auslastungsverhältnis (503), bestimmt wird, dass sich der Direktzugriffskanal in einem Überlastungszustand befindet (504); wodurch Erfassung eines Lastzustands des Direktzugriffskanals implementiert wird; wobei der Schritt des Erhaltens des maximalen Auslastungsverhältnisses und des durchschnittlichen Auslastungsverhältnisses des Direktzugriffskanals das Erhalten des maximalen Auslastungsverhältnisses und des durchschnittlichen Auslastungsverhältnisses gemäß einem gemeinsamen Messbericht in einem Leistungsstatistikzyklus umfasst; der Leistungsstatistikzyklus eine Vielzahl von gemeinsamen Messberichtszyklen umfasst; wobei der Schritt des Erhaltens des maximalen Auslastungsverhältnisses gemäß dem gemeinsamen Messbericht im Leistungsstatistikzyklus umfasst: Erhalten eines Übertragungszeitintervall-Auslastungsverhältnisses von jedem gemeinsamen Messberichtszyklus im Leistungsstatistikzyklus durch Dividieren der Anzahl von belegten Übertragungszeitintervallen im gemeinsamen Messberichtszyklus durch die Gesamtanzahl von Übertragungszeitintervallen; und Bestimmen, dass das Maximale von Übertragungszeitintervall-Auslastungsverhältnissen aus der Vielzahl von gemeinsamen Messberichtszyklen das maximale Auslastungsverhältnis ist; und

der Schritt des Erhaltens des durchschnittlichen Auslastungsverhältnisses gemäß dem gemeinsamen Messbericht im Leistungsstatistikzyklus das Erhalten des durchschnittlichen Auslastungsverhältnisses durch Dividieren der Gesamtanzahl der belegten Übertragungszeitintervalle im Leistungsstatistikzyklus durch die Gesamtanzahl der Übertragungszeitintervalle umfasst.

2.   Verfahren gemäß Anspruch 1, wobei, wenn es zwei Direktzugriffskanäle in einer Zelle gibt, im Schritt des Erhaltens des maximalen Auslastungsverhältnisses des Direktzugriffskanals das Maximale der maximalen Auslastungsverhältnisse der zwei Direktzugriffskanäle das maximale Auslastungsverhältnis der zwei Direktzugriffskanäle in der Zelle ist; und im Schritt des Erhaltens des durchschnittlichen Auslastungsverhältnisses des Direktzugriffskanals das durchschnittliche Auslastungsverhältnis der zwei Direktzugriffskanäle in der Zelle durch Dividieren der Gesamtanzahl der belegten Übertragungszeitintervalle der zwei Direktzugriffskanäle durch die Gesamtanzahl der Übertragungszeitintervalle der zwei Direktzugriffskanäle erhalten wird.

3.   Verfahren gemäß Anspruch 2, wobei sowohl der Schwellenwert für das maximale Auslastungsverhältnis als auch der erste Schwellenwert für das durchschnittliche Auslastungsverhältnis 95 % betragen.

4.   Verfahren gemäß einem der Ansprüche 1 bis 3, wobei vor dem Schritt des Erhaltens des maximalen Auslastungsverhältnisses und des durchschnittlichen Auslastungsverhältnisses des Direktzugriffskanals das Verfahren weiter umfasst:

Bestimmen, ob ein Funkressourcensteuerungs-Verbindungserfolgsverhältnis niedriger ist als ein voreingestellter Schwellenwert (501), Erhalten des maximalen Auslastungsverhältnisses und des durchschnittlichen Auslastungsverhältnisses des Direktzugriffskanals, wenn das Funkressourcensteuerungs-Verbindungserfolgsverhältnis niedriger ist als der voreingestellte Schwellenwert, und Beenden des Erfassungsvorgangs, wenn das Funkressourcensteuerungs-Verbindungserfolgsverhältnis höher ist als der voreingestellte Schwellenwert.

5. Verfahren gemäß einem der Ansprüche 1 bis 3, weiter umfassend:

Einstellen eines zweiten Schwellenwerts für das durchschnittliche Auslastungsverhältnis, der niedriger ist als der erste Schwellenwert für das durchschnittliche Auslastungsverhältnis; und wenn bestimmt wird, dass das maximale Auslastungsverhältnis höher ist als der Schwellenwert für das maximale Auslastungsverhältnis und das durchschnittliche Auslastungsverhältnis niedriger ist als der zweite Schwellenwert für das durchschnittliche Auslastungsverhältnis, Bestimmen, dass Parameterkonfiguration des Direktzugriffskanals unangemessen ist (506); wenn bestimmt wird, dass das maximale Auslastungsverhältnis niedriger ist als der Schwellenwert für das maximale Auslastungsverhältnis und das durchschnittliche Auslastungsverhältnis niedriger ist als der zweite Schwellenwert für das durchschnittliche Auslastungsverhältnis, Bestimmen, dass die Leistung des Direktzugriffskanals schlecht ist oder es ein Problem in einem Vorwärtszugriffskanal gibt (507) .

6. Vorrichtung zum Erfassen der Leistung eines Direktzugriffskanals, **dadurch gekennzeichnet, dass** sie umfasst:

ein Modul (3) zum Erhalten des maximalen Auslastungsverhältnisses und durchschnittlichen Auslastungsverhältnisses, das dazu konfiguriert ist, einen Schwellenwert für das maximale Auslastungsverhältnis und einen ersten Schwellenwert für das durchschnittliche Auslastungsverhältnis einzustellen und ein maximales Auslastungsverhältnis und ein durchschnittliches Auslastungsverhältnis des Direktzugriffskanals zu erhalten; und ein Modul (4) zum Bestimmen des maximalen Auslastungsverhältnisses und durchschnittlichen Auslastungsverhältnisses, das dazu konfiguriert ist, wenn bestimmt wird, dass das maximale Auslastungsverhältnis höher ist als der Schwellenwert für das maximale Auslastungsverhältnis und das durchschnittliche Auslastungsverhältnis höher ist als der erste Schwellenwert für das durchschnittliche Auslastungsverhältnis, zu bestimmen, dass sich der Direktzugriffskanal in einem Überlastungszustand befindet; wodurch Erfassung eines Lastzustands des Direktzugriffskanals implementiert wird; wobei das maximale Auslastungsverhältnis und das durchschnittliche Auslastungsverhältnis gemäß einem gemeinsamen Messbericht in einem Leistungsstatistikzyklus erhalten werden; der Leistungsstatistikzyklus eine Vielzahl von gemeinsamen Messberichtszyklen umfasst; wobei das Modul (3) zum Erhalten des maximalen Auslastungsverhältnisses und durchschnittlichen Auslastungsverhältnisses umfasst:

eine Einheit zum Erhalten des maximalen Auslastungsverhältnisses, die dazu konfiguriert ist, ein Übertragungszeitintervall-Auslastungsverhältnis von jedem gemeinsamen Messberichtszyklus im Leistungsstatistikzyklus durch Dividieren der Anzahl von belegten Übertragungszeitintervallen im gemeinsamen Messberichtszyklus durch die Gesamtanzahl von Übertragungszeitintervallen zu erhalten; und zu bestimmen, dass das Maximale von Übertragungszeitintervall-Auslastungsverhältnissen aus der Vielzahl von gemeinsamen Messberichtszyklen das maximale Auslastungsverhältnis ist; und eine Einheit zum Erhalten des durchschnittlichen Auslastungsverhältnisses, die dazu konfiguriert ist, das durchschnittliche Auslastungsverhältnis durch Dividieren der Gesamtanzahl der belegten Übertragungszeitintervalle im Leistungsstatistikzyklus durch die Gesamtanzahl der Übertragungszeitintervalle zu erhalten.

## Revendications

1. Procédé de détection de performance d'un canal d'accès aléatoire, **caractérisé en ce qu'**il comprend :

l'établissement d'un seuil de rapport d'utilisation maximale et d'un premier seuil de rapport d'utilisation moyenne, et l'obtention d'un rapport d'utilisation maximale et d'un rapport d'utilisation moyenne du canal d'accès aléatoire (502) ; dans lequel lorsque le rapport d'utilisation maximale est supérieur au seuil de rapport d'utilisation maximale et le rapport d'utilisation moyenne est supérieur au premier seuil de rapport d'utilisation moyenne (503), le canal d'accès aléatoire est déterminé comme étant dans un statut d'encombrement (504) ; mettant ainsi en oeuvre une détection d'un statut de charge du canal d'accès aléatoire ; dans lequel l'étape d'obtention du rapport d'utilisation maximale et du rapport d'utilisation moyenne du canal d'accès aléatoire comprend l'obtention du rapport d'utilisation maximale et du rapport d'utilisation moyenne selon un rapport de mesure commune dans un cycle statistique de performance ;

le cycle statistique de performance contient une pluralité de cycles de rapport de mesure commune ; dans lequel

l'étape d'obtention du rapport d'utilisation maximale selon le rapport de mesure commune dans le cycle statistique de performance comprend :

l'obtention d'un rapport d'utilisation d'intervalles de temps de transmission de chaque cycle de rapport de mesure commune dans le cycle statistique de performance en divisant le nombre d'intervalles de temps de transmission occupés dans le cycle de rapport de mesure commune par le nombre total d'intervalles de temps de transmission ; et la détermination du maximum de rapports d'utilisation d'intervalles de temps de transmission de la pluralité de cycles de rapport de mesure commune pour qu'il soit le rapport d'utilisation maximale ; et

l'étape d'obtention du rapport d'utilisation moyenne selon le rapport de mesure commune dans le cycle statistique de performance comprend l'obtention du rapport d'utilisation moyenne en divisant le nombre total des intervalles de temps de transmission occupés dans le cycle statistique de performance par le nombre total des intervalles de temps de transmission.

2. Procédé selon la revendication 1, dans lequel, lorsqu'il y a deux canaux d'accès aléatoire dans une cellule, à l'étape d'obtention du rapport d'utilisation maximale du canal d'accès aléatoire, le maximum des rapports d'utilisation maximale des deux canaux d'accès aléatoire est le rapport d'utilisation maximale des deux canaux d'accès aléatoire dans la cellule ; et

à l'étape d'obtention du rapport d'utilisation moyenne du canal d'accès aléatoire, le rapport d'utilisation moyenne des deux canaux d'accès aléatoire dans la cellule est obtenu en divisant le nombre total des intervalles de temps de transmission occupés des deux canaux d'accès aléatoire par le nombre total des intervalles de temps de transmission des deux canaux d'accès aléatoire.

3. Procédé selon la revendication 2, dans lequel le seuil de rapport d'utilisation maximale et le premier seuil de rapport d'utilisation moyenne sont tous deux de 95 %.

4. Procédé selon l'une quelconque des revendications 1 à 3, dans lequel, avant l'étape d'obtention du rapport d'utilisation maximale et du rapport d'utilisation moyenne du canal d'accès aléatoire, le procédé comprend en outre :

le fait de déterminer si un rapport de succès de connexion de commande de ressources radio est inférieur à un seuil préétabli (501), l'obtention du rapport d'utilisation maximale et du rapport d'utilisation moyenne du canal d'accès aléatoire si le rapport de succès de connexion de commande de ressources radio est inférieur au seuil préétabli, et la fin du processus de détection si le rapport de succès de connexion de commande de ressources radio est supérieur au seuil préétabli.

5. Procédé selon l'une quelconque des revendications 1 à 3, comprenant en outre :

l'établissement d'un second seuil de rapport d'utilisation moyenne qui est inférieur au premier seuil de rapport d'utilisation moyenne ; et s'il est déterminé que le rapport d'utilisation maximale est supérieur au seuil de rapport d'utilisation maximale et que le rapport d'utilisation moyenne est inférieur au second seuil de rapport d'utilisation moyenne, le fait de déterminer que la configuration de paramètres du canal d'accès aléatoire est déraisonnable (506) ; s'il est déterminé que le rapport d'utilisation maximale est inférieur au seuil de rapport d'utilisation maximale et que le rapport d'utilisation moyenne est inférieur au second seuil de rapport d'utilisation moyenne, le fait de déterminer que la performance du canal d'accès aléatoire est médiocre ou qu'il y a un problème dans un canal d'accès aller (507).

6. Appareil de détection de performance d'un canal d'accès aléatoire, **caractérisé en ce qu'**il comprend :

un module d'obtention de rapport d'utilisation maximale et de rapport d'utilisation moyenne (3) configuré pour établir un seuil de rapport d'utilisation maximale et un premier seuil de rapport d'utilisation moyenne, et obtenir un rapport d'utilisation maximale et un rapport d'utilisation moyenne du canal d'accès aléatoire ; et un module de détermination de rapport d'utilisation maximale et de rapport d'utilisation moyenne (4) configuré, s'il est déterminé que le rapport d'utilisation maximale est supérieur au seuil de rapport d'utilisation maximale et que le rapport d'utilisation moyenne est supérieur au premier seuil de rapport d'utilisation moyenne, pour déterminer que le canal d'accès aléatoire est dans un statut d'encombrement ; mettant ainsi en oeuvre une détection d'un statut de charge du canal d'accès aléatoire ; dans lequel le rapport d'utilisation maximale et le rapport d'utilisation moyenne sont obtenus selon un rapport de mesure commune dans un cycle statistique de performance ;

le cycle statistique de performance contient une pluralité de cycles de rapport de mesure commune ; dans lequel

le module d'obtention de rapport d'utilisation maximale et de rapport d'utilisation moyenne (3) comprend :

une unité d'obtention de rapport d'utilisation maximale configurée pour obtenir un rapport d'utilisation d'intervalles de temps de transmission de chaque cycle de rapport de mesure commune dans le cycle statistique de performance en divisant le nombre d'intervalles de temps de transmission occupés dans le cycle de rapport de mesure commune par le nombre total d'intervalles de temps de transmission ; et déterminer le maximum de rapports d'utilisation d'intervalles de temps de transmission de la pluralité de cycles de rapport de mesure commune pour qu'il soit le rapport d'utilisation maximale ; et

une unité d'obtention de rapport d'utilisation moyenne configurée pour obtenir le rapport d'utilisation moyenne en divisant le nombre total des intervalles de temps de transmission occupés dans le cycle statistique de performance par le nombre total des intervalles de temps de transmission.

FIG. 1

FIG. 2

Performance statistical cycle

| ACK TTI_1 | NoACK TTI_2 | NoACK TTI_3 | ACK TTI_4 | ACK TTI_5 | ...... | ACK TTI_n |

PRACH1

Performance statistical cycle

| NoACK TTI_1 | ACK TTI_2 | NoACK TTI_3 | ACK TTI_4 | ACK TTI_5 | ...... | ACK TTI_n |

PRACH2

## FIG. 3

**1 — RNC**

Performance statistical apparatus for measuring congestion of RACH

Performance measurement item statistical module — 11

**2 — OMC**

Performance statistical apparatus for measuring congestion of RACH

Performance measurement item collection module — 22

Performance indicator calculation module — 23

Parameter configuration module — 21

## FIG. 4

When a RRC connection setup success ratio is lower than a preset threshold, determining whether RACH is congested — 501

↓

Obtaining performance statistical result of RACH — 502

↓

The maximum utilization ratio of RACH is high and the average utilization ratio is high? — 503 — N →

The maximum utilization ratio of RACH is high and the average utilization ratio is low? — 505 — N →

Y ↓

RACH is congested — 504

Y ↓

Parameter configuration of RACH is unreasonable — 506

Performance of RACH is poor or there is a problem in FACH — 507

FIG. 5

Maximum utilization ratio and average utilization ratio obtaining module — 3

Maximum utilization ratio and average utilization ratio determining module — 4

FIG. 6

**EP 2 458 910 B1**

**REFERENCES CITED IN THE DESCRIPTION**

**Patent documents cited in the description**

- WO 2008041916 A1
- US 5991633 A
- US 2006153131 A1